(19) Europäisches Patentamt
European Patent Office
Office européen des brevets

(11) Veröffentlichungsnummer: **0 229 980 B1**

(12) **EUROPÄISCHE PATENTSCHRIFT**

(45) Veröffentlichungstag der Patentschrift: **17.06.92**

(51) Int. Cl.$^5$: **C09B 26/04**

(21) Anmeldenummer: **86117221.1**

(22) Anmeldetag: **10.12.86**

(54) **Verfahren zur Herstellung kationischer Hydrazonfarbstoffe.**

(30) Priorität: **21.12.85 DE 3545605**

(43) Veröffentlichungstag der Anmeldung:
**29.07.87 Patentblatt 87/31**

(45) Bekanntmachung des Hinweises auf die Patenterteilung:
**17.06.92 Patentblatt 92/25**

(84) Benannte Vertragsstaaten:
**BE CH DE ES FR GB IT LI**

(56) Entgegenhaltungen:
**EP-A- 0 037 505**
**EP-A- 0 037 506**
**EP-A- 0 042 556**

(73) Patentinhaber: **BAYER AG**
**W-5090 Leverkusen 1 Bayerwerk(DE)**

(72) Erfinder: **Dorsch, Hans-Lothar, Dr.**
**An der Ruthen 6**
**W-5000 Köln 80(DE)**
Erfinder: **Kalz, Dietmar, Dr.**
**Zum Thielensiefen 2**
**W-5206 Neunkirchen(DE)**
Erfinder: **Hühne, Volker, Dr.**
**Kurt-Schumacher-Ring 15A**
**W-5090 Leverkusen(DE)**
Erfinder: **Raue, Roderich, Dr.**
**Berta-von-Suttner-Strasse 48**
**W-5090 Leverkusen(DE)**

**EP 0 229 980 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von kationischen Hydrazonfarbstoffen der allgemeinen Formel

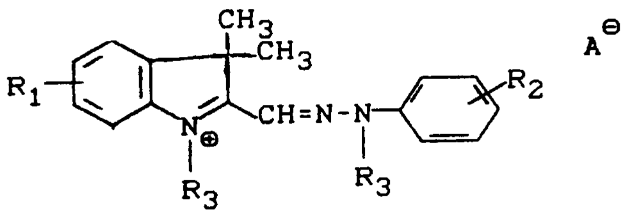

I

worin
$R_1$ für Wasserstoff, $C_1$-$C_4$-Alkyl, $C_1$- bis $C_4$-Alkoxy, Nitro oder Halogen,
$R_2$ für Wasserstoff, $C_1$- bis $C_4$-Alkyl, $C_1$- bis $C_4$-Alkoxy, Halogen oder Phenylazo,
$R_3$ für $C_1$- bis $C_3$-Alkyl und
$A^{\ominus}$ für ein Anion stehen,
durch Quaternierung von Azobasen der allgemeinen Formel

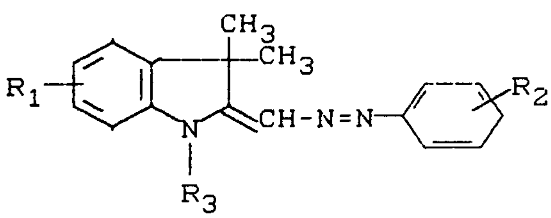

II

worin
$R_1$, $R_2$ und $R_3$ die obengenannte Bedeutung haben,
mit Dialkylsulfaten der allgemeinen Formel

$(R_3\text{-}O)_2SO_2$ III

worin
$R_3$ die obengenannte Bedeutung hat,
in Gegenwart von Wasser Alkali- oder Erdalkali-sulfat und gegebenenfalls durch Austausch des Alkylsulfat-Anions gegen ein anderes Anion.

Aus der EP-A 37 505 war lediglich bekannt, von II unterschiedliche Azobasen mit Diethylsulfaten umzusetzen, zudem ohne jeden Hinweis auf die Verwendung von Alkali-oder Endalkalisulfaten.

Das Verfahren wird in der Regel in einem pH-Bereich von 6 bis 10 unter Verwendung von säurebindenden Mitteln wie Soda, Magnesiumoxid oder Natronlauge bei Temperaturen zwischen 20 und 70 °C durchgeführt und erfordert Reaktionszeiten von ca. 30 Minuten bis ca. 4 Stunden.

Bevorzugtes Alkalisulfat ist Natriumsulfat und bevorzugtes Erdalkalisulfat ist Magnesiumsulfat. Besonders bevorzugt ist Natriumsulfat.

Das bevorzugte Gewichtsverhältnis von Azobase II:Wasser ist 1:1-10, das von Azobase II:Na- oder Mg-sulfat ist 1:0,5-4, und das bevorzugte Molverhältnis von Azobase:Dialkylsulfat ist 1:1,5-5.

Das Verfahren kann man beispielsweise durchführen, indem man bei Raumtemperatur die Suspension aus wäßriger Natriumsulfatlösung, Azobase II und säurebindender Base vorlegt und möglichst schnell mit dem Dialkylsulfat versetzt, wobei die anschließend einsetzende schwach exotherme Reaktion durch Kühlung unter 70 °C gehalten wird. Aus der Suspension entsteht zunächst eine dünnflüssige, zweiphasige Mischung des Farbharzes I in der Salzlösung, das sich bei fortschreitender Durchalkylierung verfestigt und teilkristallisiert.

Vor der Weiterverarbeitung zum handelsfertigen Produkt, kann die Reaktionsmischung zur Zerstörung von überschüssigem Dialkylsulfat angesäuert und bei erhöhter Temperatur, z.B. 60 bis 90 °C, nachgerührt werden.

Da das Verfahren zu Farbsalzen I mit hoher Reinheit führt und somit die Abtrennung von Nebenprodukten nicht erforderlich ist, kann die erhaltene Reaktionsmischung beispielsweise in einem Schaufeltrockner zur Trockne eingedampft werden. Das erfindungsgemäß zugesetzte Sulfat bleibt dann als Stellmittel im Farbstoffpräparat. Diese Arbeitsweise hat den Vorteil, daß bei der Herstellung des Farbstoffs kein Abwasser anfällt. Die Aufarbeitung der Reaktionsmischung kann aber auch so erfolgen, daß das sich abscheidende Farbsalz I von der salzhaltigen wäßrigen Schicht getrennt wird. Das annähernd salzfreie Farbstoffharz mit dem n-Alkylsulfat-Anion kristallisiert nach dem Erkalten und liefert nach dem Versetzen mit Stellmitteln handelsfähige Farbstoffe. Das Produkt eignet sich besonders gut zur Herstellung von handelsfähigen Farbstofflösungen.

Die erfindungsgemäße Quaternierung kann vorteilhafterweise in Gegenwart von Lösungsvermittlern für Azobase und Dialkylsulfat durchgeführt werden. Ihre bevorzugte Konzentration beträgt bis zu 15 Gew,-%, bezogen auf Azobase. Als Lösungsvermittler sind insbesondere wasserunlösliche oder wasserschwerlösliche organische Verbindungen wie (Chlor)-Kohlenwasserstoffe,
z.B. Benzol, Toluol, Xylol oder Chlorbenzol, Alkohole, Ether oder Ester,
z.B. Laurylalkohol, Anisol, Phenoxyethanol, Essigsäure-Benzoesäure-, Phthalsäure- oder Toluolsulfonsäurealkylester, und
insbesondere neutrale Emulgatoren wie Umsetzungsprodukte von 2 bis 60 Mol Ethylenoxid oder Propylenoxid mit $C_6$-$C_{22}$-Alkanole, -Alkylamine oder -Alkylcarbonsäuren,
z.B. Umsetzungsprodukt von Laurylalkohol mit 2 bis 10 Ethylenoxid,
Umsetzungsprodukt von Ölsäure mit 4 bis 8 Ethylenoxid,
Umsetzungsprodukt von Oleylalkohol mit 30 bis 60 Ethylenoxid oder
Umsetzungsprodukt von Rizinusöl mit 20 bis 40 Ethylenoxid zu nennen.

Eine bevorzugte Ausführungsform des erfindungsgemäßen Verfahrens besteht darin, daß die Herstellung der Basen II durch Diazotierung von Aminen

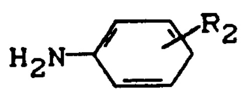

IV

und Kupplung mit Verbindungen

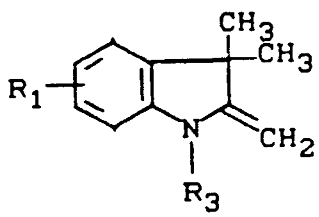

V

und die Quaternierung zu den Farbstoffen I in einem Eintopfverfahren durchgeführt werden. Dabei wird die Diazotierung vorteilhafterweise in wäßriger Schwefelsäure anstelle der sonst üblichen Salzsäure vorgenommen. Der Vorteil besteht darin, daß bei der Zugabe von Natronlauge, die zum Erreichen des für die Kupplung günstigen pH-Wertes von 2 bis 5 zugefügt wird, bereits ein Teil des für die Quaternierung benötigten Na-sulfats entsteht, und daß außerdem keine Chloridionen anwesend sind, die bei der Quaternierung Nebenprodukte bilden können.

In den Formeln wird unter Halogen vorzugsweise Fluor, Chlor oder Brom verstanden. Außerdem stehen bevorzugt:

- $R_1$ für Wasserstoff, Methyl oder Methoxy,
- $R_2$ für Wasserstoff, Methyl, Ethyl, Methoxy, Ethoxy oder Phenylazo,
- $R_3$ für Methyl oder Ethyl und
- $A^\ominus$ für Methosulfat, Ethosulfat, Chlorid, Bromid, Sulfat, Phosphat, Formiat oder Acetat oder Gemische dieser Anionen.

Besonders geeignet ist das erfindungsgemäße Verfahren zur Herstellung der Farbstoffe der Formel I, worin

- $R_1$ für Wasserstoff,
- $R_2$ für Wasserstoff, Methoxy oder Methyl,
- $R_3$ für Methyl und
- $A^\ominus$ für die obengenannten Anionen stehen.

Das erfindungsgemäße Verfahren ermöglicht die nahezu quantitative Umsetzung der Basen II zu den Farbstoffen I. Die erhaltenen Farbstoffe besitzen gute Echtheiten und färben insbesondere sauer modifizierte Fasern in klaren brillanten Farbtönen.

Gegenüber bekannten wäßrigen Quaternierungsverfahren liegt der Vorteil des neuen Verfahrens darin, daß bei gleicher Menge an Dialkylsulfat und gleichen Reaktionstemperaturen eine Erhöhung des Umsetzungsgrades und eine Verringerung der Reaktionszeit erreicht wird.

Beispiel 1

55 g (= 0,2 Mol) der Azoverbindung der Formel

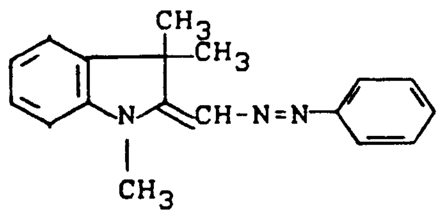

werden in 350 g wäßriger 30 %iger Natriumsulfatlösung bei Raumtemperatur suspendiert. Man versetzt mit 4,6 g Magnesiumoxid und tropft innerhalb von 20 Minuten, bei 30 °C beginnend bis maximal 40 °C bei wirksamer Rührung 50 g (= 0,4 Mol) Dimethylsulfat zur Mischung. Die Mischung wird 2 Stunden bei 40 °C nachgerührt, wobei sich aus der anfänglichen Suspension mit zunehmendem Durchmethylierungsgrad eine Emulsion des Farbharzes bildet. Bei Ruhigstellen der Rührung scheidet sich das Farbharz als Oberphase ab, das im Dünnschichtchromatogramm nur noch 0,01 % obiger Azoverbindung enthält. Die alkalische Emulsion wird mit ca. 5,5 g 78 %iger Schwefelsäure auf den pH-Wert 5,0 angesäuert und zwecks Zerstörung des überschüssigen Dimethylsulfats 30 Minuten bei 65 °C nachgerührt. Nach scharfer Abtrennung des Farbharzes bei 65 °C liegt der kationische Farbstoff der Formel

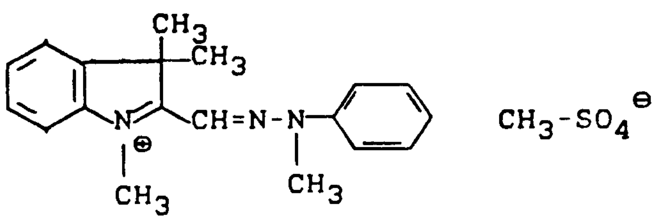

vor. Der Farbstoff kristallisiert beim Abkühlen aus und liefert auch ohne weitere Reinigung auf sauermodifizierten Synthesefasern eine grünstichig-gelbe Nuance mit ausgezeichneter Echtheit.

Das warme Farböl wird in 300 Teilen 2,5 %iger Salzsäure gelöst und bei 60 °C mit 45 Teilen Natriumchlorid versetzt. Nach dem Erkalten resultiert eine kristalline Suspension des Farbstoffchlorids.

Der Farbstoff wird mit vergleichbarer Reinheit erhalten, wenn statt der genannten 350 g 30 %iger Natriumsulfatlösung 350 g einer 25 %igen, einer 20 %igen, einer 15 %igen oder einer 10 %igen Natriumsulfatlösung verwendet wird.

Wenn statt der 350 g Natriumsulfatlösung der genannten Konzentrationen 350 Teile Wasser eingesetzt werden, enthält der Trockenfarbstoff aber noch 12 % des oben angegebenen Azovorproduktes.

Wenn die beschriebene Methylierungsreaktion statt in 350 Teilen 30 %iger Natriumsulfatlösung in 350 Teilen 30 %iger Kaliumsulfatlösung, 30 %iger Aluminiumsulfatlösung, 30 %iger Ammoniumsulfatlösung oder in 30 %iger Schwefelsäuremethylester-Natriumsalz-Lösung ausgeführt wird, sind die Vorproduktgehalte im Trockenfarbstoff mindestens 5- bis 10fach höher.

Beispiel 2

58 g (= 0,2 Mol) der Azoverbindung

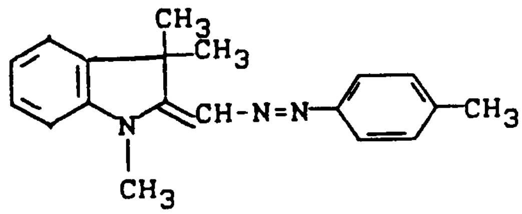

suspendiert man in 350 g einer 20 %igen wäßrigen Natriumsulfatlösung. Nach Versetzen mit 8,1 g Magnesiumoxid dosiert man innerhalb von etwa 20 Minuten bei 30 ° C bis höchstens 42 ° C bei starker Rührung 93 g (0,7 Mol) Dimethylsulfat in die Mischung. Es wird bei 40 ° C 4 Stunden nachgerührt und aus der Mischung eine teilkristalline Farbharzprobe für ein Dünnschichtchromatogramm entnommen. Im Farbharz wird ein Vorproduktgehalt unter 0,1 % gefunden. Die Mischung wird mit ca. 6 g 78 %iger Schwefelsäure auf pH 5 angesäuert, auf 65 ° C erhitzt und 30 Minuten nachgerührt. Nach dem Stillsetzen der Rührung wird die untere wäßrige Phase abgetrennt und das warme Farbharz in 300 g 2,5 %iger Salzsäure aufgenommen. Die rotbraune Farbstoffmethosulfat-Lösung wird bei 75 ° C bei starker Rührung mit 25 g Natriumchlorid versetzt und langsam auf Raumtemperatur abgekühlt, wobei bereits ab ca. 50 ° C der Farbstoff der Formel

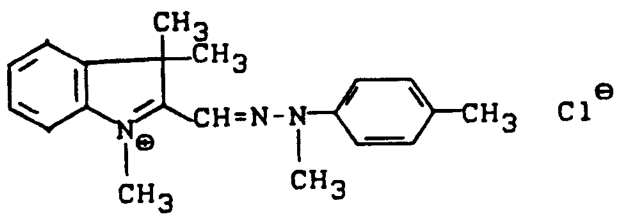

kristallin ausfällt. Nach dem Abfiltrieren und Waschen mit wäßriger Natriumchloridlösung und Trocknen werden 71 g des Farbstoffs erhalten.

Zu dem Farbstoff mit gleicher Reinheit gelangt man auch, wenn man statt 350 g 20 %iger Natriumsulfatlösung 350 g einer 30 %igen oder 10 %igen Natriumsulfatlösung verwendet.

Beispiel 3

In 350 g 25 %iger wäßriger Natriumsulfatlösung werden bei Raumtemperatur 61 g (= 0,2 Mol) der Azoverbindung

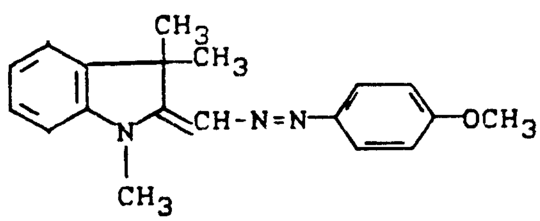

suspendiert. Man versetzt die Mischung mit 8,6 g Magnesiumoxid und erwärmt auf 30 ° C. Innerhalb von 10 bis 20 Minuten bei starker Rührung dosiert man 101 g (= 0,8 Mol) Dimethylsulfat ein, wobei die Temperatur bis 45 ° C ansteigen darf. Es wird 4 Stunden bei 40 ° C bis 45 ° C nachgerührt, wobei sich aus der Vorproduktsuspension nach etwa 1 Stunde ein Farböl bildet, das gegen Ende der Methylierungszeit teilweise durchkristallisiert. Im Dünnschichtchromatogramm des Farbharzes werden 0,2 % Vorprodukt ermittelt. Nach Ansäuern der Mischung mit ca. 2 g 78 %iger Schwefelsäure auf pH 5 wird 30 Minuten bei 65 ° C nachgerührt und anschließend nach Abstellen der Rührung 1 Stunde bei 75 ° C das obere Farbharz sich abscheiden gelassen. Bei diesem Farbharz handelt es sich um das reine Farbstoffmethosulfat der Formel

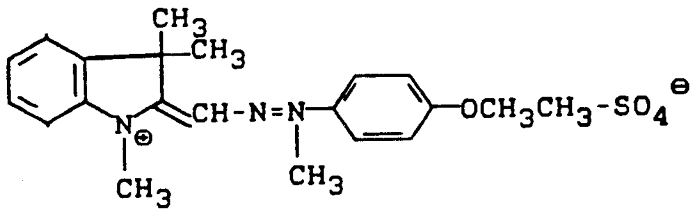

Dieser Farbstoff kann nach Trocknen auch ohne zusätzliche Reinigungsoperationen zur Färbung von sauer modifizierten Synthesefasern in goldgelber Nuance verwendet werden.

Das abgetrennte Farbstoffmethosulfatharz wird bei 70 °C in 300 g 2,5 %iger Salzsäure gelöst und in der Hitze mit 9 g Natriumchlorid versetzt. Innerhalb von 5 Stunden wird die Mischung von 70 °C auf Raumtemperatur unter Rühren abgekühlt. Nach Filtrieren und Waschen mit verdünnter Kochsalzlösung erhält man nach dem Trocknen 60 g kristallines Farbstoffchlorid.

Auch dieser Farbstoff zeichnet sich durch ein hohes Allgemeinechtheitsniveau auf sauer modizierten Synthesefasern oder Geweben aus, die in einer goldgelben Nuance angefärbt werden.

Zu dem identischen Farbstoffmethosulfat oder Farbstoffchlorid der angegebenen Formel gelangt man auch, falls statt der 350 g 25 %iger Natriumsulfatlösung 350 g einer 30 %igen Suspension (instabile Lösung) oder 350 g einer 15 %igen oder 10 %igen Natriumsulfatlösung eingesetzt wird.

Beispiel 4

In die Lösung aus 350 g 25 %iger wäßriger Natriumsulfatlösung werden bei Raumtemperatur 61 g (= 0,2 Mol) der Azoverbindung des Beispiels 3 suspendiert.

Man versetzt die Mischung mit 8,6 g Magnesiumoxid sowie mit 6,1 g (10 % des Azovorproduktes) mit einer der nachfolgend aufgeführten Substanzen:
Benzol,
Toluol,
o-, m-, p-Xylol oder Gemische,
Ethylbenzol,
Chlorbenzol,
Anisol,
2-Phenoxyethanol,
Benzoesäuremethyl- oder -ethylester oder -n-butylester,
Benzoesäure-2-hydroxy-ethylester,
Glykolmono- oder-di-benzoat,
Dibutylphthalat,
o-, p-Toluolsulfonsäuremethyl- oder ethylester,
Essigsäureethylester,
Laurylalkohol rein oder technische Gemische,
Umsetzungsprodukt aus Laurylalkohol mit 2 bis 10 Ethylenoxid,
Umsetzungsprodukt aus Ölsäure mit 4 bis 8 Ethylenoxid,
Umsetzungsprodukt aus Oleylalkohol mit 30 bis 60 Ethylenoxid oder
Umsetzungsprodukt aus Rizinusöl mit 20 bis 40 Ethylenoxid.

Die Suspension wird auf 30 °C erwärmt und im Laufe von 10 bis 20 Minuten bei guter Rührung mit 101 g (= 0,8 Mol) Dimethylsulfat versetzt. Es wird insgesamt 4 Stunden bei 40 °C nachgerührt, wobei bereits nach 2 Stunden im Dünnschichtchromatogramm des Farbharzes ein Vorproduktgehalt von ca. 0,2 % gefunden wird, der dem nach 4 Stunden des Beispiels 3 entspricht. Nach 4-stündigem Nachrühren wird in einer Probe des Farbharzes ein Vorproduktgehalt von nur 0,1 bis 0,05 % gefunden.

Nach Ansäuern der Reaktionsmischung mit ca. 2 g 78 %iger Schwefelsäure auf pH 5 wird 30 Minuten bei 65 °C nachgerührt und nach Stillsetzen der Rührung die Mischung 1 Stunde bei 75 °C sich trennen gelassen.

Bei dem Farböl handelt es sich um das in Beispiel 3 formelmäßig angegebene Farbstoffmethosulfat.

Beispiel 5

Bei -5 °C bis 3 °C werden in verdünnter wäßriger Schwefelsäure 39,5 g Anilin durch Eindosieren von 87 g einer 34,4 %igen Natriumnitritlösung diazotiert. Der Überschuß an salpetriger Säure wird in der Kälte

durch allmähliches Versetzen mit ca. 5 g einer 15 %igen Amidosulfonsäurelösung zerstört. Die kalte Diazoniumsalzlösung versetzt man mit 69,3 g 1,3,3-Trimethyl-2-methylenindolin und 15,3 g Essigsäure und stellt durch Eindosieren von 152 g 30 %iger Natronlauge bei 10 ° C bis 20 ° C innerhalb von 5 Stunden die Azoverbindung des Beispiels 1 her, die in Form einer gelben Suspension vorliegt.

Zu der Mischung gibt man 42,3 g Natriumsulfat und 12,8 g Magnesiumoxid, wobei sich ein pH-Wert von mindestens 10 einstellt. Bei 25 ° C beginnend versetzt man bei starker Rührung innerhalb von ca. 20 Minuten mit 145,5 g Dimethylsulfat, in der Weise, daß 40 ° C nicht überschritten wird. Man rührt bei 35 ° C bis 40 ° C 4 Stunden nach und entnimmt nach Abkühlen auf Raumtemperatur aus der Mischung eine Dünnschichtchromatogramm-Probe vom Farbharz. Der Vorproduktgehalt liegt unter 0,15 %. Es wird mit ca. 11 g 78 %iger Schwefelsäure auf pH 5 angesäuert. Sodann erhitzt man zwecks Dimethylsulfatzerstörung 30 Minuten bei 65 ° C. Die Mischung läßt man nach Abstellen der Rührung 1 Stunde bei 60 ° C bis 65 ° C stehen und trennt die untere wäßrige Phase in der Hitze scharf ab.

Bei dem Farbharz, das nach dem Erkalten sofort durchkristallisiert, handelt es sich um das Farbstoffmethosulfat des Beispiels 1.

Dieser Farbstoff kann ohne Reinigungsoperation zur Färbung von Matrialien aus Polyacrylnitril oder sauer modifiziertem Polyamid- oder Polyester eingesetzt werden,

Beispiel 6

96 g des trockenen Farbstoffmethosulfats von Beispiel 3 werden bei 40 ° C in 104 g 50 %iger wäßriger Essigsäure klar gelöst. Diese Farbstofflösung ist sowohl in der Kälte als auch bei ca. 40 ° C lagerstabil. Die goldgelben Ausfärbungen zeichnen sich auf sauer modifizierten Synthesefasern durch ein hohes Echtheitsniveau aus. Werden statt der genannten 104 g 50 %iger Essigsäure 304 g der Lösung aus 208 g 50 %iger Essigsäure und 96 g Ethylenglykol oder 104 g der Lösung aus 20 g 2-Hydroxypropionitril und 84 g Ethylenglykol verwendet, so erhält man ebenfalls wertvolle, handelsfertige Farbstofflösungen.

**Patentansprüche**

1. Verfahren zur Herstellung von kationischen Hydrazonfarbstoffen der allgemeinen Formel

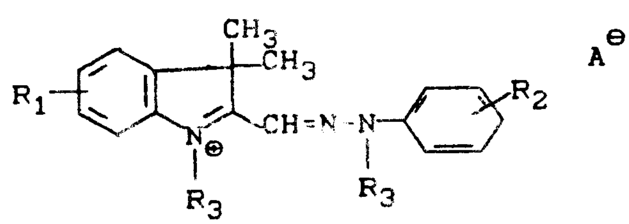

worin

$R_1$ für Wasserstoff, $C_1$-$C_4$-Alkyl, $C_1$- bis $C_4$-Alkoxy, Nitro oder Halogen,
$R_2$ für Wasserstoff, $C_1$- bis $C_4$-Alkyl, $C_1$- bis $C_4$-Alkoxy, Halogen oder Phenylazo,
$R_3$ für $C_1$- bis $C_3$-Alkyl und
$A^{\ominus}$ für ein Anion stehen,

durch Umsetzung von Azobasen der allgemeinen Formel

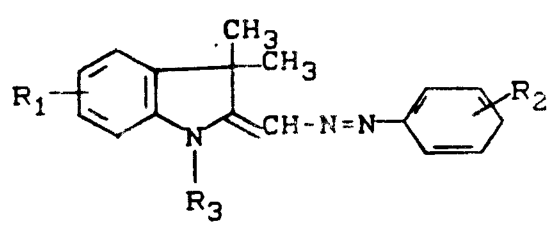

mit Dialkylsulfaten der allgemeinen Formel

$(R_3\text{-O-})_2SO_2$

in Anwesenheit von Wasser und gegebenenfalls durch Austausch des Alkylsulfat-Anions gegen ein anderes Anion, dadurch gekennzeichnet, daß die Quaternierung in Gegenwart von Alkali- oder Erdalkalisulfat durchgeführt wird,

2. Verfahren gemäß Anspruch 1, dadurch gekennzeichnet, daß das Gewichtsverhältnis von Azobase:Sulfat 1:0,5-4 und das Molverhältnis von Azobase:Dialkylsulfat 1:1,5-5 betragen.

3. Verfahren nach Anspruch 1, dadurch gekennzeichnet, daß die Quaternierung in Gegenwart von Natrium- oder Magnesiumsulfat durchgeführt wird.

4. Verfahren zur Herstellung von kationischen Hydrazonfarbstoffen der Formel des Anspruchs 1, worin
   - $R_1$ für Wasserstoff, Methyl oder Methoxy,
   - $R_2$ für Wasserstoff, Methyl, Ethyl, Methoxy, Ethoxy oder Phenylazo,
   - $R_3$ für Methyl oder Ethyl und
   - $A^{\ominus}$ für Methosulfat, Ethosulfat, Chlorid, Sulfat, Phosphat oder Acetat oder Gemische dieser Anionen.

5. Verfahren gemäß Anspruch 1, dadurch gekennzeichnet, daß die Quaternierung in Gegenwart eines Lösungsvermittlers durchgeführt wird.

6. Verfahren gemäß Anspruch 1, dadurch gekennzeichnet, daß die Quaternierung in Gegenwart eines Umsetzungsproduktes von 2 - 60 Mol Ethylenoxid oder Propylenoxid an Alkylalkohole mit 6 - 22 C-Atomen durchgeführt wird.

7. Verfahren gemäß Anspruch 1, dadurch gekennzeichnet, daß die Quaternierung in einem Eintopfverfahren durchgeführt wird, im Anschluß an die Herstellung der Azobasen durch Diazotierung von Aminen

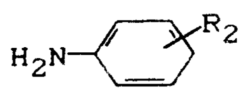

und Kupplung mit Verbindungen

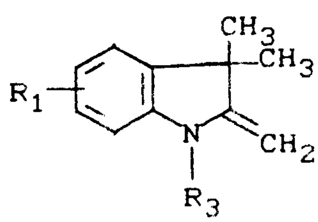

in schwefelsaurer Lösung.

## Claims

1. Process for preparing cationic hydrazone dyestuffs of the general formula

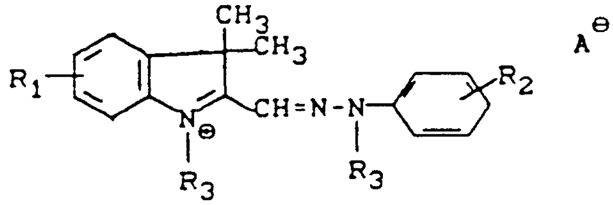

in which

$R_1$ represents hydrogen, $C_1$-$C_4$-alkyl, $C_1$- to $C_4$-alkoxy, nitro or halogen,

$R_2$ represents hydrogen, $C_1$- to $C_4$-alkyl, $C_1$- to $C_4$-alkoxy, halogen or phenylazo,

$R_3$ represents $C_1$- to $C_3$-alkyl and

$A^-$ represents an anion,

by reacting azo bases of the general formula

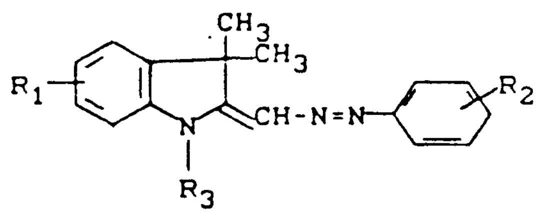

with dialkyl sulphates of the general formula

$(R_3\text{-O-})_2SO_2$

in the presence of water and, where appropriate, by replacing the alkylsulphate anion by another anion, characterised in that the quaternisation is carried out in the presence of alkali metal sulphate or alkaline earth metal sulphate.

2. Process according to Claim 1, characterised in that the weight ratio of azo base:sulphate is 1:0.5-4 and the molar ratio of azo base:dialkyl sulphate is 1:1.5-5.

3. Process according to Claim 1, characterised in that the quaternisation is carried out in the presence of sodium sulphate or magnesium sulphate.

4. Process for preparing cationic hydrazone dyestuffs of the formula of Claim 1 in which

$R_1$ represents hydrogen, methyl or methoxy,

$R_2$ represents hydrogen, methyl, ethyl, methoxy, ethoxy or phenylazo,

$R_3$ represents methyl or ethyl and

$A^-$ represents methosulphate, ethosulphate, chloride, sulphate, phosphate or acetate or mixtures of these anions.

5. Process according to Claim 1, characterised in that the quaternisation is carried out in the presence of a solubiliser.

6. Process according to Claim 1, characterised in that the quaternisation is carried out in the presence of a reaction product of 2 - 60 mol of ethylene oxide or propylene oxide on alkyl alcohols having 6 - 22 C atoms.

7. Process according to Claim 1, characterised in that the quaternisation is carried out in a single-vessel process, subsequent to the preparation of the azo bases by diazotising amines

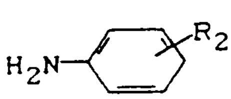

and coupling with compounds

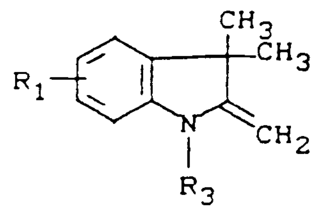

in sulphuric acid solution.

**Revendications**

**1.** Procédé pour préparer des colorants hydrazoniques cationiques, de formule générale :

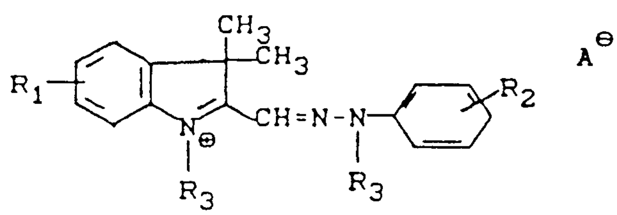

dans laquelle

- $R_1$ représente un atome d'hydrogène, un groupe alkyle en $C_1$-$C_4$, alcoxy en $C_1$ à $C_4$, nitro ou halogéno,
- $R_2$ représente un atome d'hydrogène, un groupe alkyle en $C_1$ à $C_4$, alcoxy en $C_1$ à $C_4$, halogéno ou phénylazo,
- $R_3$ représente un groupe alkyle en $C_1$ à $C_3$, et
- $A^{\ominus}$ représente un anion,

par réaction de bases azoïques de formule générale

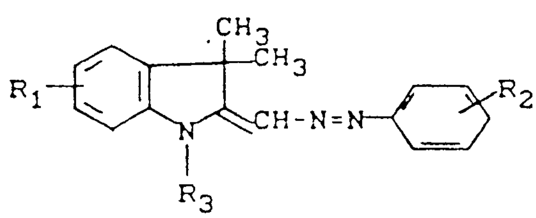

avec des sulfates de dialkyles de formule générale

$(R_3\text{-}O\text{-})_2SO_2$

en présence d'eau et, éventuellement, par remplacement de l'anion alkylsulfate par un autre anion, procédé caractérisé en ce qu'on effectue la quaternisation en présence d'un sulfate alcalin ou alcalino-terreux.

**2.** Procédé selon la revendication 1, caractérisé en ce que le rapport pondéral entre la base azoïque et le sulfate vaut 1 : 0,5 à 4 et le rapport molaire entre la base azoïque et le sulfate de dialkyle vaut 1 : 1,5 à 5.

**3.** Procédé selon la revendication 1, caractérisé en ce qu'on conduit la quaternisation en présence de sulfate de sodium ou de sulfate de magnésium.

**4.** Procédé pour préparer des colorants hydrazoniques cationiques répondant à la formule indiquée à la

revendication 1, dans laquelle

- $R_1$ représente un atome d'hydrogène, un groupe méthyle ou éthoxy,
- $R_2$ représente un atome d'hydrogène, un groupe méthyle, éthyle, méthoxy, éthoxy ou phénylazo,
- $R_3$ représente un groupe méthyle ou éthyle, et
- $A^{\ominus}$ représente un anion méthosulfate, éthosulfate, chlorure, sulfate, phosphate ou acétate ou des mélanges de ces anions.

**5.** Procédé selon la revendication 1, caractérisé en ce qu'on conduit la quaternisation en présence d'un solvant auxiliaire ou tiers-solvant.

**6.** Procédé selon la revendication 1, caractérisé en ce qu'on conduit la quaternisation en présence d'un produit de la réaction de fixation de 2 à 60 mol d'oxyde d'éthylène ou d'oxyde de propylène sur des alcools alkyliques comportant 6 à 22 atomes de carbone.

**7.** Procédé selon la revendication 1, caractérisé en ce qu'on effectue la quaternisation en un procédé appliqué dans un seul récipient, à la suite de la préparation des bases azoïques par diazotation d'amines

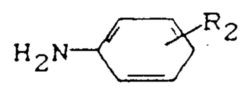

et copulation avec des composés

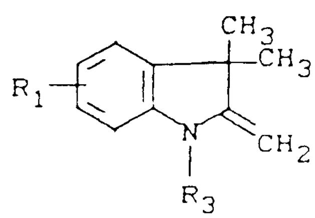

dans une solution acidifiée par de l'acide sulfurique.